# EUROPEAN PATENT APPLICATION

(11) **EP 1 865 435 A1**
(43) Date of publication of application: **12.12.2007**
(21) Application number: 06290930.4
(22) Date of filing: 06.06.2006
(51) Int. Cl.: G06F 21/02

(54) **Enhanced exception handling**

(71) Applicant: TEXAS INSTRUMENTS FRANCE, 06271 Villeneuve Loubet Cédex (FR)
(72) Inventor: Neveux, Cedric Gaston Christian, c/oTexas Instruments France, Villeneuve Loubet 06270 (FR)
(74) Representative: Holt, Michael

(57) **Abstract**

A computer system (44), useful for personal digital assistant (PDA) and mobile phone m-commerce and e-commerce and other similar applications, includes a processor (46) adapted to activate first and second security levels for the system. The system also comprises a plurality of exception handlers (92, 94, 96), each exception handler executed by the processor and associated with one of the security levels. A first exception handler (92) associated with the first security level receives an exception and forwards the exception to a second exception handler 94 associated with the second security level for service. The second exception handler either services the exception or forwards the exception to a third exception handler (96) according to a security level of the exception.

## Description

### BACKGROUND

Mobile electronic devices such as personal digital assistants (PDAs) and digital cellular telephones are increasingly used for electronic commerce (e-commerce) and mobile commerce (m-commerce) . It is desired for the programs that execute on the mobile devices to implement the e-commerce and m-commerce functionality in a secure mode to reduce the likelihood of attacks by malicious programs and to protect sensitive data.

For security reasons, most processors provide two levels of operating privilege: a lower level of privilege for user programs; and a higher level of privilege for use by the operating system. The higher level of privilege may or may not provide adequate security for m-commerce and e-commerce, however, given that this higher level relies on proper operation of operating systems with vulnerabilities that may be publicized. In order to address security concerns, some mobile equipment manufacturers implement a third level of privilege, or secure mode, that places less reliance on corruptible operating system programs, and more reliance on hardware-based monitoring and control of the secure mode. U.S. Patent . Publication No. 2003/0140245, entitled "Secure Mode for Processors Supporting MMU and Interrupts," describes a hardware-monitored secure mode for processors.

Each of these privilege levels contains an exception handler used to service exceptions such as interrupt requests. Improvement in the performance of the exception handlers results in an improvement in the performance of the mobile system.

### SUMMARY

Disclosed herein is an efficient technique for servicing exceptions. An illustrative embodiment of the technique includes a system comprising a processor adapted to activate first and second security levels for the system. The system also comprises a plurality of exception handlers, each exception handler executed by the processor and associated with one of the security levels. A first exception handler associated with the first security level receives an exception and forwards the exception to a second exception handler associated with the second security level for service. The second exception handler either services the exception or forwards the exception to a third exception handler according to a security level of the exception.

Another illustrative embodiment includes a system comprising a processor capable of switching between a secure mode, a non-secure mode, and an intermediate mode usable to transition between the secure and non-secure modes. The system also comprises a plurality of exception handlers, each of the exception handlers associated with at least one of the modes. Upon receiving an exception, the processor switches from the intermediate mode to the secure mode in which a secure exception handler determines a security level of the exception. According to the security level, the processor selects one of the modes so that the exception is serviced by either the secure exception handler or a non-secure exception handler in the non-secure mode.

Yet another illustrative embodiment includes a method comprising receiving an exception while a computer system is in a first security mode, switching the system to a second security mode to determine a security level of the exception, and servicing the exception in either the second security mode or a third security mode according to the security level.

### BRIEF DESCRIPTION OF THE DRAWINGS

FIG. 1 shows a computing system constructed in accordance with at least some embodiments of the invention;
FIG. 2 shows a portion of the megacell of FIG. 1 in greater detail, and in accordance with embodiments of the invention;
FIG. 3 shows various security modes used by the system of FIG. 1, in accordance with embodiments of the invention;
FIG. 4 shows a flow diagram of an exemplary method in accordance with embodiments of the invention;
FIG. 5 shows a diagram describing the functionality of the various exception handlers in accordance with embodiments of the invention; and
FIG. 6 shows a flow diagram of another method in accordance with embodiments of the invention.

### DETAILED DESCRIPTION

The term "secure mode" refers to a state of operation of a computer system, or the like, in which operations normally vulnerable to security threats (e.g., malicious software) are protected from at least some such threats. The term "non-secure mode" refers to a mode of operation of a computer system in which operations do not require as much security as that provided in the secure mode. Illustrative examples of secure and non-secure mode are implemented in systems having the ARM^{®} TrustZone^{®} architecture, although the scope of this disclosure is not limited to any particular architecture.

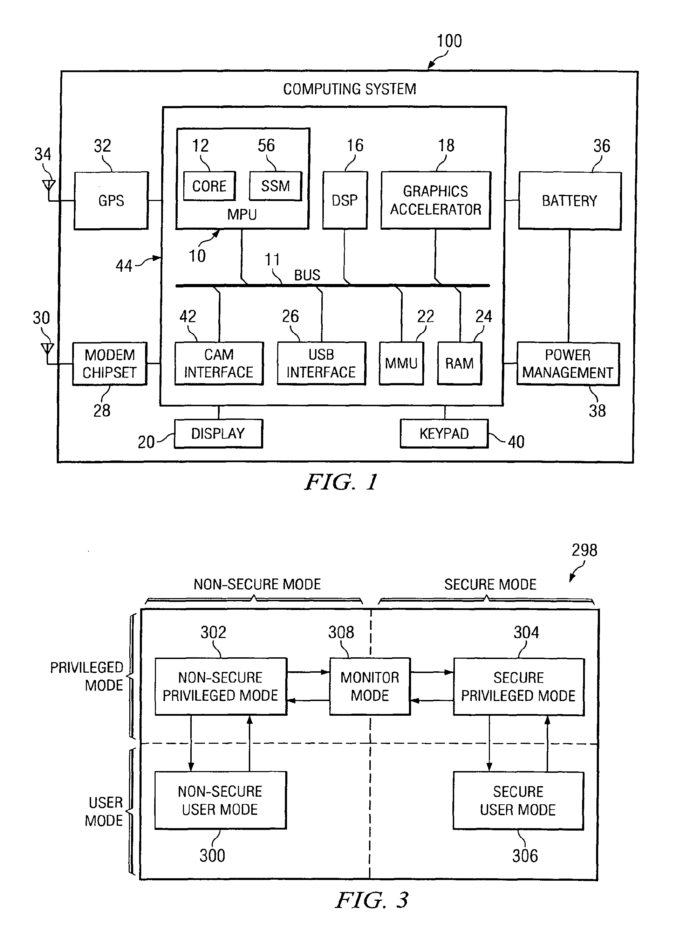

FIG. 1 shows a computing system 100 constructed in accordance with at least some embodiments of the invention. The computing system 100 may comprise a multiprocessing unit (MPU) 10 coupled to various other system components by way of a bus 11. The MPU 10 may comprise a processor core 12 that executes applications, possibly by having a plurality of processing pipelines. The MPU 10 may further comprise a security state machine (SSM) 56 which, as will be more fully discussed below, aids in allowing the computer system 100 to enter a secure mode for execution of secure software, such as m-commerce and e-commerce software.

The computing system 100 may further comprise a digital signal processor (DSP) 16 that aids the MPU 10 by performing task-specific computations, such as graphics manipulation and speech processing. A graphics accelerator 18 may couple both to the MPU 10 and DSP 16 by way of the bus 11. The graphics accelerator 18 may perform necessary computations and translations of information to allow display of information, such as on display device 20. The computing system 100 may further comprise a memory management unit (MMU) 22 coupled to random access memory (RAM) 24 by way of the bus 11. The MMU 22 may control access to and from the RAM 24 by any of the other system components such as the MPU 10, the DSP 16 and the graphics accelerator 18. The RAM 24 may be any suitable random access memory, such as synchronous RAM (SRAM) or RAMBUS ™-type RAM.

The computing system 100 may further comprise a USB interface 26 coupled to the various system components by way of the bus 11. The USB interface 26 may allow the computing system 100 to couple to and communicate with external devices.

The SSM 56, preferably a hardware-based state machine, monitors system parameters and allows the secure mode of operation to initiate such that secure programs may execute from and access a portion of the RAM 24. Having this secure mode is valuable for any type of computer system, such as a laptop computer, a desktop computer, or a server in a bank of servers. However, in accordance with at least some embodiments of the invention, the computing system 100 may be a mobile (e.g., wireless) computing system such as a cellular telephone, personal digital assistant (PDA), text messaging system, and/or a computing device that combines the functionality of a messaging system, personal digital assistant and a cellular telephone. Thus, some embodiments may comprise a modem chipset 28 coupled to an external antenna 30 and/or a global positioning system (GPS) circuit 32 likewise coupled to an external antenna 34.

Because the computing system 100 in accordance with at least some embodiments is a mobile communication device, computing system 100 may also comprise a battery 36 which provides power to the various processing elements. The battery 36 may be under the control of a power management unit 38. A user may input data and/or messages into the computing system 100 by way of the keypad 40. Because many cellular telephones also comprise the capability of taking digital still and video pictures, in some embodiments the computing system 100 may comprise a camera interface 42 which may enable camera functionality, possibly by coupling the computing system 100 to a charge couple device (CCD) array (not shown) for capturing digital images.

Inasmuch as the systems and methods described herein were developed in the context of a mobile computing system 100, the remaining discussion is based on a mobile computing environment. However, the discussion of the various systems and methods in relation to a mobile computing environment should not be construed as a limitation as to the applicability of the systems and methods described herein to just mobile computing environments.

In accordance with at least some embodiments of the invention, many of the components illustrated in FIG. 1, while possibly available as individual integrated circuits, are preferably integrated or constructed onto a single semiconductor die. Thus, the MPU 10, digital signal processor 16, memory controller 22 and RAM 24, along with some or all of the remaining components, are preferably integrated onto a single die, and thus may be integrated into a computing device 100 as a single packaged component. Having multiple devices integrated onto a single die, especially devices comprising a multiprocessor unit 10 and RAM 24, may be referred to as a system-on-a-chip (SoC) or a megacell 44. While using a system-on-a-chip may be preferred, obtaining the benefits of the systems and methods as described herein does not require the use of a system-on-a-chip.

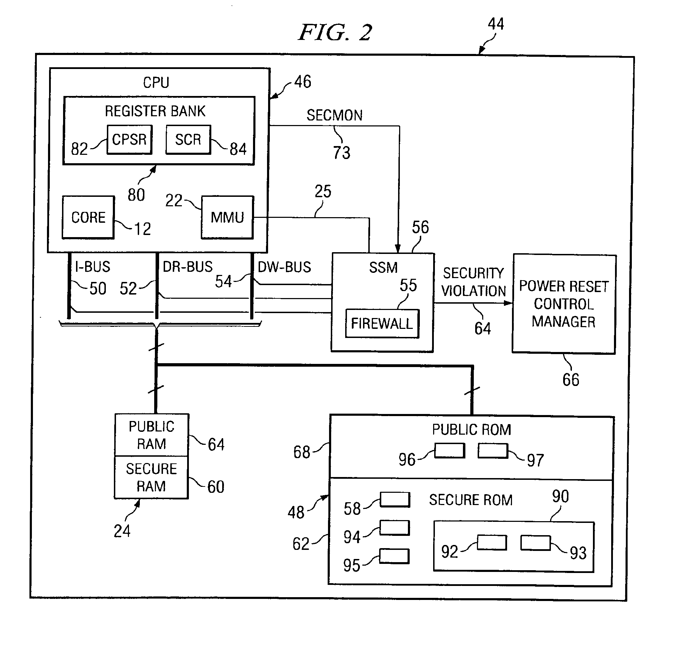

FIG. 2 shows a portion of the megacell 44 in greater detail. The processor 46 comprises a core 12, a memory management unit (MMU) 22 and a register bank 80 including a current program status register (CPSR) 82 and a secure configuration register (SCR) 84, described further below. The processor 46 couples to a security state machine (SSM) 56 by way of a security monitoring (SECMON) bus 73, also described below. The processor 46 couples to the RAM 24 and ROM 48 by way of an instruction bus 50, a data read bus 52 and a data write bus 54. The instruction bus 50 may be used by the processor 46 to fetch instructions for execution from one or both of the RAM 24 and ROM 48. Data read bus 52 may be the bus across which data reads from RAM 24 propagate. Likewise, data writes from the processor 46 may propagate along data write bus 54 to the RAM 24.

The ROM 48 and the RAM 24 are partitioned into public and secure domains. Specifically, the ROM 48 comprises a public ROM 68, accessible in non-secure mode, and a secure ROM 62, accessible in secure mode. Likewise, the RAM 24 comprises a public RAM 64, accessible in non-secure mode, and a secure RAM 60, accessible in secure mode. In at least some embodiments, the public and secure domain partitions in the ROM 48 and the RAM 24 are virtual (i.e., non-physical) partitions generated and enforced by the MMU 22. The SSM 56 monitors the MMU 22 for security purposes via bus 25, as described further below. The public ROM 68 comprises an exception handler 96 and an exception vector table 97. The secure ROM 62 comprises a secure kernel 538, an exception handler 94, an exception vector table 95 and a monitor mode software application 90. In turn, the monitor mode software application 90 comprises an exception handler 92 and an exception vector table 93. Each of the exception handlers and exception vector tables comprise software code stored in ROM memory.

Secure ROM 62 and secure RAM 60 preferably are accessible only in secure mode. In accordance with embodiments of the invention, the SSM 56 monitors the entry into, execution during and exiting from the secure mode. The SSM 56 preferably is a hardware-based state machine that monitors various signals within the computing system 100 (e.g., instructions on the instruction bus 50, data writes on the data write bus 52 and data reads on the data read bus 54) and activity in the processor core 12 through SECMON bus 73. The SSM 56 may comprise a dedicated firewall 55 which protects various applications and other code being executed in the secure mode from, e.g., malicious software. The dedicated firewall 55 also prevents public mode processes from intermingling with secure mode processes, thereby guarding data and software stored in the secure mode.

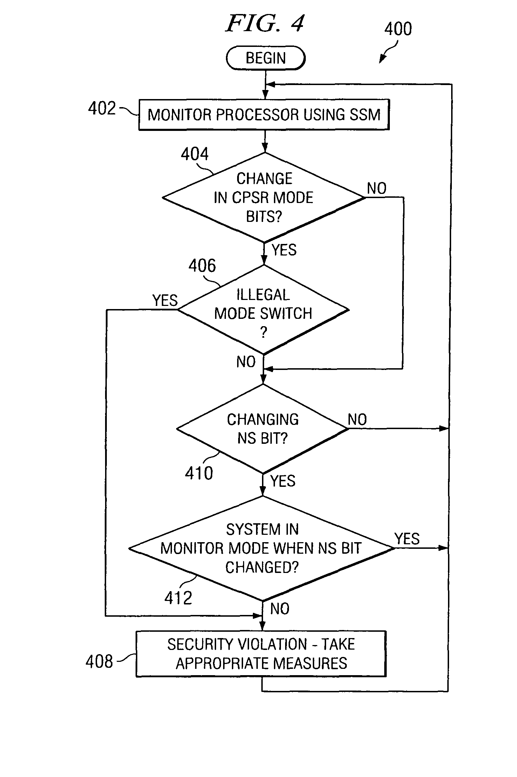

Each of the secure and non-secure modes may be partitioned into "user" and "privileged" modes. Programs that interact directly with an end-user, such as a web browser, are executed in the user mode. Programs that do not interact directly with an end-user, such as the operating system (OS), are executed in the privileged mode. By partitioning the secure and non-secure modes in this fashion, a total of four modes are made available. As shown in FIG. 3, in order of ascending security level, these four modes include the non-secure user mode 300, the non-secure privileged mode 302, the secure user mode 306, and the secure privileged mode 304. There is an intermediate monitor mode 308, described further below, between the modes 302 and 304. The computer system 100 may operate in any one of these five modes at a time.

The computer system 100 may switch from one mode to another. FIG. 3 illustrates a preferred mode-switching sequence 298. The sequence 298 is preferred because it is more secure than other possible switching sequences. For example, to switch from the non-secure user mode 300 to the secure privileged mode 304, the system 100 should first pass through non-secure privileged mode 302 and the monitor mode 308. Likewise, to pass from the secure user mode 306 to the non-secure user mode 300, the system 100 should switch from the secure user mode 306 to the secure privileged mode 304, from the secure privileged mode 304 to the monitor mode 308, from the monitor mode 308 to the non-secure privileged mode 302, and from the non-secure privileged mode 302 to the non-secure user mode 300.

Each mode switch is enacted by the adjustment of bits in the CPSR 82 and the SCR 84. The CPSR 82 comprises a plurality of mode bits. The status of the mode bits determines which mode the computer system 100 is in. Each mode corresponds to a particular combination of mode bits. The mode bits may be manipulated to switch modes. For example, the bits may be manipulated to switch from mode 300 to mode 302.

The SCR 84 comprises a non-secure (NS) bit. The status of the NS bit determines whether the computer system 100 is in secure mode or non-secure mode. In at least some embodiments, an asserted NS bit indicates that the system 100 is in non-secure mode. In other embodiments, an asserted NS bit indicates that the system 100 is in secure mode. Adjusting the NS bit switches the system 100 between secure and non-secure modes. Because the status of the NS bit is relevant to the security of the system 100, the NS bit preferably is adjusted only in the monitor mode 308, since the monitor mode 308 is, in at least some embodiments, the most secure mode.

More specifically, when the system 100 is in the monitor mode 308, the processor 46 executes monitor mode software (not specifically shown) on the secure ROM 62, which provides a secure transition from the non-secure mode to the secure-mode, and from the secure mode to the non-secure mode. In particular, the monitor mode software performs various security tasks to prepare the system 100 for a switch between the secure and non-secure modes. The monitor mode software may be programmed to perform security tasks as desired. If the processor 46 determines that these security tasks have been properly performed, the monitor mode software adjusts the NS bit in the SCR register 84, thereby switching the system 100 from non-secure mode to secure mode, or from secure mode to non-secure mode.

The NS bit and the CPSR bits are provided by the processor 46 to the SSM 56 via the SECMON bus 73. The SSM 56 uses the SECMON bus 73 to monitor any mode switches enacted by the processor 46. For example, if the system 100 switches from the non-secure user mode 300 to the non-secure privileged mode 302, the CPSR mode bits on the SECMON bus 73 reflect the mode switch. The SSM 56 receives the updated CPSR mode bits and determines that the system 100 has switched from the non-secure user mode 300 to the non-secure privileged mode 302. Likewise, if the system 100 switches from the non-secure privileged mode 302 to the secure privileged mode 304, the processor 46 updates the CPSR mode bits to reflect the mode switch, and further unasserts the NS bit in the SCR 84 to reflect the switch from the non-secure mode to the secure mode. Upon receiving the updated CPSR mode bits and the NS bit, the SSM 56 determines that the system 100 has switched from the non-secure mode to the secure mode and, more specifically, from the non-secure privileged mode 302 to the secure privileged mode 304.

The SSM 56 uses the SECMON bus 73 in this way to ensure that the processor 46 does not take any action that may pose a security risk. For example, for security reasons, the processor 46 preferably adjusts the NS bit in the SCR 84 only when the system 100 is in the monitor mode 308. The SSM 56 uses the SECMON bus 73 to ensure that the processor 46 does not adjust the NS bit when the system 100 is not in monitor mode 308. Thus, if the SSM 56 detects that the NS bit is being adjusted by the processor 46 and the CPSR 82 mode bits indicate that the system 100 is in the monitor mode 308, the SSM 56 takes no action. However, if the SSM 56 detects that the NS bit is being adjusted and the CPSR mode bits indicate that the system 100 is not in monitor mode 308 (e.g., the system 100 is in one of the modes 300, 302, 304 or 306), the SSM 56 may report a security violation to the power reset control manager 66 via the security violation bus 64. The power reset control manager 66 then may reset the system 100. The SSM 56 also may take any of a variety of alternative actions to protect the computer system 100. Examples of such protective actions are provided in the published patent application entitled, "System and Method of Identifying and Preventing Security Violations Within a Computing System," U.S. Patent Application No. 10/961,748 (US2006-0005072).

In addition to monitoring the NS bit and/or CPSR bits, the SSM 56 also may use the SECMON bus 73 to ensure that when switching modes, the processor 46 does not deviate from the preferred mode switching path shown in FIG. 3. In particular, the SSM 56 monitors the CPSR bits provided on the SECMON bus 73. Each mode (e.g., mode 300, 302, 304, 306, and 308) corresponds to a particular combination of CPSR bits. By decoding the CPSR bits provided on the SECMON bus 73, the SSM 56 determines the mode in which the computer system 100 is operating. If, in decoding the CPSR bits, the SSM 56 determines that the processor 46 has performed an illegal mode switch (e.g., from mode 300 to mode 304 without first passing through modes 302 and 308), the SSM 56 reports a security violation to the power reset control manager 66 via the security violation bus 64. The SSM 56 alternatively may take any other suitable action(s) to protect the computer system 100, such as those disclosed in the U.S. Patent Application 10/961,748 referenced above.

In addition to monitoring the NS bit, the SSM 56 also may use the SECMON bus 73 in conjunction with the MMU bus 25 to monitor the MMU 22 and to ensure that the MMU's activities do not compromise the security of the computer system 100. For example, for security reasons, it is undesirable for the MMU 22 to be disabled when switching from non-secure mode to secure-mode. Accordingly, the SSM 56 checks bus 25 to ensure that the MMU 22 is enabled when the NS bit on the SECMON bus 73 indicates that the system 100 is switching from the non-secure mode to the secure mode. For example, if the MMU 22 is disabled when the NS bit is unasserted, the SSM 56 reports a security violation to the power reset control manager 66 via the security violation bus 64. Alternatively, the SSM 56 may take any of the protective actions mentioned above.

For security reasons, it is also undesirable to fetch instructions from public (i.e., unsecure) memory when in the secure or monitor modes. For this reason, the SSM 56 may monitor both the instruction bus 50 and the SECMON bus 73 to ensure that while the system 100 is in either the monitor mode or secure mode, the processor 46 does not fetch an instruction from the public ROM 68 and/or the public RAM 64. If the SSM 56 detects that an instruction tagged as "unsecure" is fetched on the instruction bus 50 while bits on the SECMON bus 73 indicate that the system 100 is in monitor or secure mode, the SSM 56 reports a security violation to the power reset control manager 66 via the security violation bus 64. The SSM 56 also may take alternative measures to protect the computer system 100 as mentioned above.

For security reasons, it is also undesirable to read data from and/or write data to public (i.e., unsecure) memory when in the monitor mode. For this reason, the SSM 56 may monitor the data read bus 52, the data write bus 54 and the SECMON bus 73 to ensure that the processor 46 does not read data from and/or write data to either the public ROM 68 and/or the public RAM 64 while the system 100 is in the monitor mode. For example, if the SSM 56 detects that data read from the public ROM 68 is being carried on the data read bus 52 while bits on the SECMON bus 73 indicate that the system 100 is in the monitor mode, the SSM 56 reports a security violation to the power reset control manager 66 or takes some other suitable, protective measure. In another example, if the SSM 56 detects that data is being written to the public RAM 64 via data write bus 54 and the SECMON bus 73 indicates that the system 100 is in monitor mode, the SSM 56 takes a suitable, protective measure (e.g., reports a security violation to the power reset control manager 66).

FIG. 4 illustrates a flow diagram of a process 400 used to monitor the computer system 100 for at least some of the security violations mentioned above. The process 400 begins by monitoring the processor 46 using the SSM 56 (block 402). The process 400 further comprises determining whether one or more of the CPSR mode bits have been altered (block 404). As mentioned above, the SSM 56 determines whether one or more of the CPSR mode bits have been altered by monitoring the SECMON bus 73. If any of the CPSR mode bits have been altered, the process 400 comprises determining whether an illegal mode switch has occurred (block 406). An illegal mode switch may be, for example, a deviation from the preferred mode switching pattern shown in FIG. 3. The pattern may be stored, for instance, on the CPU 46 or on one of the memories 24 or 48. If an illegal mode switch has occurred, the process 400 comprises reporting a security violation and taking one or more suitable, protective measures (block 408).

Otherwise, the process 400 then comprises using the SECMON bus 73 to determine whether the NS bit is being changed (block 410). If the NS bit is being changed, the process 400 comprises using the CPSR bits on the SECMON bus 73 to determine whether the change is occurring (or occurred) with the computer system 100 in the monitor mode (block 412). If the change in the NS bit is occurring (or occurred) with the computer system 100 in a mode other than the monitor mode, the process 400 comprises reporting a security violation and taking one or more suitable, protective measures (block 408).

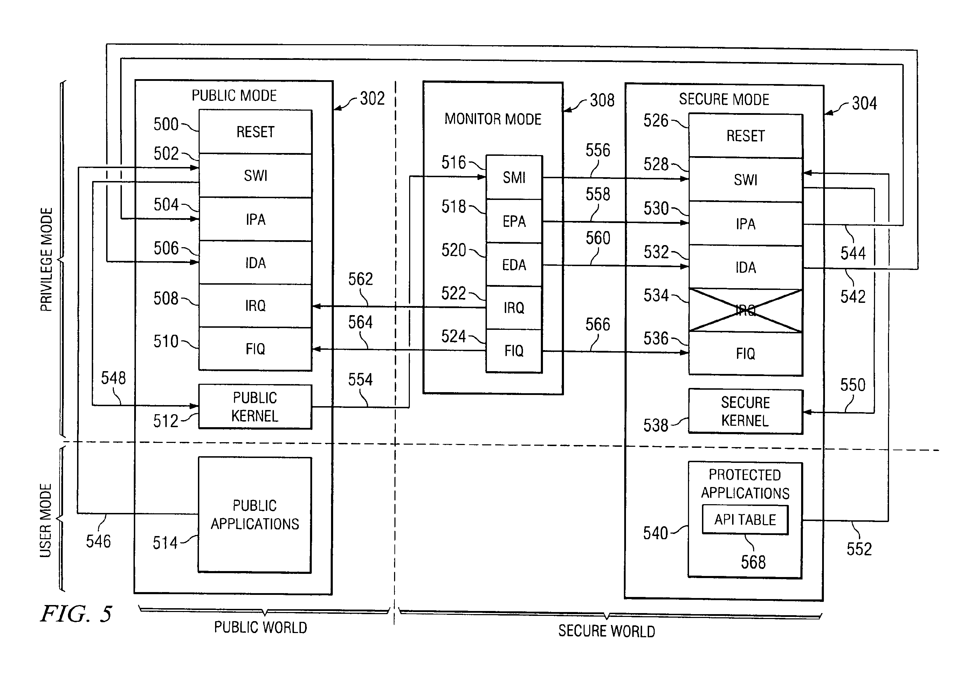

FIG. 5 shows a diagram describing how the exception handlers 92, 94 and 96 may handle various exceptions in accordance with embodiments of the invention. The handling of exceptions as shown in FIG. 5 is illustrative of at least some embodiments of the invention but should not be construed as a limitation on the scope of disclosure. Suitable modifications and variations of FIG. 5 are included within the scope of disclosure. FIG. 5 shows the public user mode 300, public privileged mode 302, secure privileged mode 304, secure user mode 306, and monitor mode (e.g., intermediate mode) 308 in between the public privileged mode 302 and the secure privileged mode 304. The public user mode 300 comprises public applications 514 (e.g., media players). The public privileged mode 302 comprises a public kernel 512, which is used to establish the public mode environment. The secure user mode 306 comprises protected applications 540 (e.g., data rights management applications), each of which preferably comprises an application program interface (API) table 568. The secure privileged mode 304 comprises secure kernel 538, which is used to establish the secure mode environment, and which provides various secure services (e.g., cryptographic encoding/decoding services) to applications outside the secure privileged mode (e.g., protected applications 540).

Referring to FIGS. 2 and 5, each of the modes 302, 304 and 308. corresponds to a separate exception handler 96, 94 and 92, respectively. Likewise, each exception handler 96, 94 and 92 corresponds to an exception vector table 97, 95 or 93, respectively. Each vector table comprises a data structure having at least one entry, and each entry cross-references a type of exception with the mode which should service that type of exception. When one of the exception handlers 96, 94 or 92 receives an exception, such as an interrupt request, the exception handler (e.g., a software handler or a hardware handler such as a microprocessor unit exception controller, not specifically shown) searches the corresponding exception vector table 97, 95, or 93 to determine if the vector table comprises an entry which matches the exception. If a matching exception is found in a vector table, the entry is used to determine where the exception should be transferred, and the exception is forwarded accordingly. The forwarding of various exceptions are now discussed.

When an interrupt request (IRQ) is received while the system is in secure mode, the system enters the public mode via the monitor mode to service the interrupt request. Thus, as indicated by reference number 522, the monitor mode exception handler 92 receives the IRQ exception and searches the vector table 93 for an entry matching the IRQ exception. The matching entry indicates where the IRQ exception should be forwarded. Such an indication may be in the form of an address or some other suitable indicator. In the case of an IRQ exception, the exception is transferred to the public mode 302, as indicated by reference numbers 562 and 508. The IRQ is then serviced in the public mode 302. As indicated by the "X" mark associated with reference number 534, the secure mode 304 does not handle IRQs. When the system is in public mode 302 and receives an IRQ, the IRQ is serviced in the public mode.

When a fast interrupt request (FIQ) is received, the system enters the monitor mode, which manages the FIQ. As indicated by reference number 524, the FIQ is examined to determine whether the FIQ should be serviced in secure mode 304 or public mode 302. Specifically, the FIQ preferably comprises a bit which indicates where the FIQ should be transferred. In some embodiments, a "1" bit indicates that the FIQ should be transferred to the secure mode 304 and a "0" bit indicates that the FIQ should be transferred to the public mode 302. In other embodiments, a "0" bit indicates that the FIQ should be transferred to the secure mode 304 and a "1" bit indicates that the FIQ should be transferred to the public mode 302. Other mechanisms also may be used to designate the FIQ for a particular mode. In case the FIQ comprises a bit which indicates that the FIQ is to be transferred to the secure mode 304, the FIQ is transferred to the secure mode 304 and is serviced in the secure mode 304 (indicated by reference numbers 566 and 536). In case the FIQ comprises a bit which indicates that the FIQ is to be transferred to the public mode 302, the FIQ is transferred to the public mode 302 and is serviced in the public mode 302 (indicated by reference numbers 564 and 510). Although possible and within the scope of disclosure, the FIQ preferably is not serviced in the monitor mode 308. In case the system is in the public mode 302 when the FIQ is received, as indicated by reference number 510, the public mode 302 services the FIQ. In case the system is in the secure mode 304 when the FIQ is received, as indicated by reference number 536, the secure mode 304 services the FIQ.

A software interrupt (SWI) is an interrupt used in the user mode to enter the privileged mode. For example, a protected application 540 running in the user mode may need to access a secure service in the privilege mode. As previously explained, secure services are available by way of the secure kernel 538. Accordingly, the protected application 540 preferably accesses the secure kernel 538 by way of the SWI 528. To access the SWI 528, the API table 568 is used. The API table 568 comprises a plurality of entries, each of which cross references a desired action with a specific indicator. For example, since the protected application 540 is to generate an interrupt with the SWI 528 which calls the secure kernel 538, the protected application 540 searches the API table 568 for an indicator which would enable the application 540 to access the SWI 528. The indicator may be any suitable object capable of causing the SWI 528 to call the secure kernel 538. The protected application 540 uses the indicator to call the SWI 528, as indicated by arrow 552. In turn, the SWI 528 generates an interrupt which accesses the secure kernel 538, as indicated by arrow 550. The interrupt comprises one or more bits which indicate the desired secure services for the protected application 540. The secure kernel 538 then provides the desired secure service(s) to the protected application 540. As indicated by arrows 546 and 548, a similar process may be used in the public mode 302 for a public application 514 to access the public kernel 512 by way of an SWI 502. In some embodiments, the public kernel 512 may access secure services by generating a software monitor interrupt (SMI) which is transferred to the monitor mode 308, as indicated by arrow 554. A SMI received in the monitor mode 308 is transferred to the secure mode 304 (as indicated by arrow 556), where the SMI is serviced as an SWI 528.

Because the public kernel 512 is able to access secure services using an SMI, and because the monitor mode 308 guards secure mode processes from public mode processes, it is possible to run operating systems (OSes) in secure mode. Moreover, these OSes can be selected as desired and are not restricted to any particular type of OS, since the secure mode is OS-agnostic.

A reset exception causes the system to be reset in secure mode 304. An exception 500 is handled by shifting to the public mode 302 via the monitor mode 308. An exception 526 is handled in the secure mode 304. Thus, the reset exception 500 is serviced in public mode 302, and the reset exception 526 is serviced in secure mode 304.

If the system is in monitor mode when an external prefetch abort (EPA) 518 or an external data abort (EDA) 520 is received, the EPA and/or EDA is transferred directly to the secure mode 304. Specifically, an EPA 518 is transferred to the secure mode 304, as indicated by arrow 558, whereupon it is analyzed as an internal prefetch abort (IPA) 530. Likewise, an EDA 520 is transferred to the secure mode 304, as indicated by arrow 560, whereupon it is analyzed as an internal data abort (IDA) 532. In the secure mode 304, the IPA 530 is analyzed to determine whether the IPA 530 is to be serviced in the secure mode 304 or in the public mode 302. The IPA 530 preferably comprises one or more bits which indicate where the IPA 530 is to be serviced. In at least some embodiments, these bits indicate a security level of the IPA 530. If the bit(s) indicates that the IPA 530 is to be serviced in the secure mode 304, it is serviced in the secure mode 304. If the bit(s) indicates that the IPA 530 is to be serviced in the public mode 302, then the IPA 530 is transferred to the public mode 302, as indicated by arrow 544. The IPA 530 is serviced in the public mode 302 as indicated by reference number 504. Likewise, in the secure mode 304, the IDA 532 is analyzed to determine whether the IDA 532 is to be serviced in the secure mode 304 or in the public mode 302. The IDA 532 preferably comprises one or more bits which indicate where the IDA 532 is to be serviced. If the bit(s) indicates that the IDA 532 is to be serviced in the secure mode 304, it is serviced in the secure mode 304. If the bit(s) indicates that the IDA 532 is to be serviced in the public mode 302, then the IDA 532 is transferred to the public mode 302, as indicated by arrow 542. The IDA 532 is serviced in the public mode 302 as indicated by reference number 506. In at least some embodiments, the IPA 530 and the IDA 532 are analyzed using common software code.

Because an EPA or EDA received in the monitor mode 308 preferably is transferred to the secure mode 304 without analysis, the amount of code associated with monitor mode 308 is reduced in comparison to the amount of code which would otherwise be present. The way in which an abort exception is serviced at least partially depends on the privilege level in which the abort exception was generated. For example, if a protected application 540 (e.g., running in user mode) generates an abort exception, the protected application 540 may be aborted. However, if an abort exception is generated in the privileged mode, the entire system 100 may be reset.

The exception handlers 96, 94 and 92 route the various exceptions to the appropriate modes based on the associated vector tables 97, 95 and 93, respectively. In at least some embodiments, the vector tables 97, 95 and 93 are populated using the SCR 84. In particular, the SCR 84 may comprise a bit for one or more exception types. The bit for each exception type describes the mode in which that exception type preferably is serviced. For example, the SCR 84 may comprise a bit for IRQs. If this bit is set to "0" to indicate that IRQs are to be serviced in the public mode 302, then received IRQs are transferred to the public mode 302.

When an exception is transferred from a first mode to a second mode, the exception may be stored in a queue (not specifically shown) until the second mode is entered, whereupon the exceptions in the queue may be serviced on a first-come, first-served basis. For example, if the system is in the monitor mode and an IRQ is received, the IRQ may be forwarded to a public mode exception queue. The next time the system enters the public mode, the exceptions stored in the exception queue, including the IRQ, may be serviced. Alternatively, the system may switch modes as soon as an exception is received. Using the same example, if the system is in the monitor mode and an IRQ is received, the system may switch to the public mode so that the IRQ may be serviced. After the IRQ is serviced, the system optionally may switch back to the monitor mode. The scope of disclosure is not limited to these servicing techniques. Various other techniques also are contemplated.

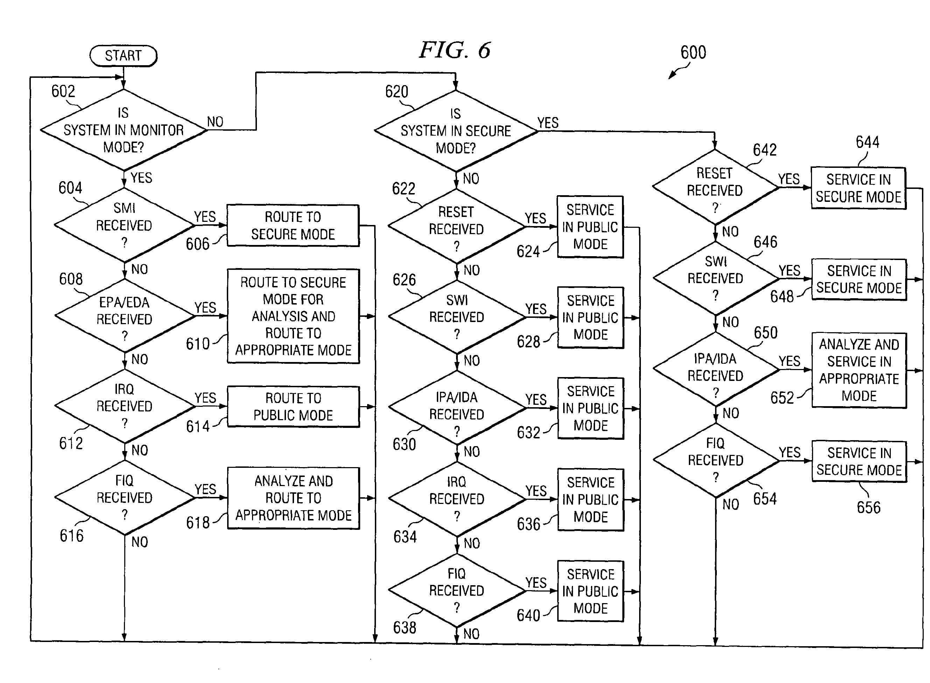

FIG. 6 shows a flow diagram of a method 600 in accordance with embodiments of the invention. The method 600 begins by determining whether the system 100 is in monitor mode (block 602). If the system is in monitor mode, the method 600 continues by determining whether a received exception is an SMI (block 604). If the exception is an SMI, the method 600 comprises routing the SMI to secure mode (block 606) for service. If the exception is not an SMI, the method 600 comprises determining whether the exception is an EPA or EDA (block 608). If the exception is an EPA or EDA, the method 600 comprises routing the exception to secure mode for analysis, and forwarding or servicing the exception accordingly (i.e., forwarding to public mode or servicing in the secure mode) (block 610). In particular, the EPA or EDA is analyzed to determine a security level of the exception (e.g., using an indicator stored in the exception). If the EPA or EDA is suitable for service in the secure mode, then the EPA or EDA may be serviced in the secure mode. However, if the EPA or EDA is unsuitable for service in the secure mode, the EPA or EDA is serviced in the public mode instead.

Otherwise, the method 600 comprises determining whether the exception is an IRQ (block 612). If the exception is an IRQ, the method 600 comprises routing the exception to public mode (block 614). Otherwise, the method 600 comprises determining whether the exception is an FIQ (block 616). If the exception is an FIQ, the method 600 comprises analyzing the FIQ and routing the FIQ to the appropriate mode (block 618). As previously described, the FIQ preferably comprises a bit which indicates the mode that is to service the FIQ.

If the system is not in the monitor mode (block 602), the method 600 comprises determining whether the system is in secure mode (block 620). If the system is in secure mode, the method 600 further comprises determining whether a received exception is a reset exception (block 642). If the exception is a reset exception, the method 600 comprises servicing the exception in the secure mode (block 644). Otherwise, the method 600 comprises determining if the exception is an SWI (block 646). If the exception is an SWI, the method 600 comprises servicing the exception in the secure mode (block 648). Otherwise, the method 600 comprises determining whether the exception is either an IPA or an IDA (block 650). If the exception is an IPA or IDA, the method 600 comprises analyzing and servicing the exception in the appropriate mode (block 652), as previously described. Otherwise, the method 600 comprises determining whether the exception is an FIQ (block 654). If the exception is an FIQ, the method 600 comprises servicing the exception in the secure mode (block 656).

If the system is not in the monitor mode (block 602) or in the secure mode (block 620), then it is in the public mode. If the system is in the public mode, the method 600 comprises determining whether a received exception is a reset exception (block 622). If so, the method 600 comprises servicing the reset exception in the public mode (block 624). Otherwise, the method 600 comprises determining whether the exception is an SWI (block 626). If so, the SWI is serviced in the public mode (block 628). Otherwise, the method 600 comprises determining if the exception is either an IPA or an IDA (block 630). If so, the exception is serviced in the public mode (block 632). Otherwise, the method 600 comprises determining if the exception is an IRQ (block 634) . If so, the method 600 comprises servicing the exception in the public mode (block 636). Otherwise, the method 600 comprises determining whether the exception is an FIQ (block 638). If so, the method 600 comprises servicing the FIQ in the public mode (block 640).

The various steps in method 600 may be performed in any suitable order and are not limited to the order shown in FIG. 6. Further, the above discussion is meant to be illustrative of the principles and various embodiments of the present invention. Numerous variations and modifications will become apparent to those skilled in the art once the above disclosure is fully appreciated. It is intended that the following claims be interpreted to embrace all such variations and modifications.

## Claims

1. A system (44), comprising:
a processor (46) adapted to activate first and second security levels for the system; and
a plurality of exception handlers (92, 94, 96), each exception handler executed by the processor and associated with one of the security levels;
wherein a first exception handler (92) associated with the first security level receives an exception and forwards the exception to a second exception handler (94) associated with the second security level for service; and
wherein the second exception handler either services the exception or forwards the exception to a third exception handler (96) according to a security level of the exception.

2. The system of claim 1, wherein the second exception handler is associated with a secure mode, the third exception handler is associated with a non-secure mode, and the first exception handler is associated with an intermediate mode which facilitates transition between the secure and non-secure modes.

3. The system of claim 2, wherein the secure mode provides more security than the intermediate mode, and wherein the intermediate mode provides more security than the non-secure mode.

4. The system of claim 1, 2 or 3, wherein the exception is serviced by the second exception handler if one or more security bits associated with the exception indicates that the exception is to be securely serviced.

5. A system (44), comprising:
a processor (46) capable of switching between a secure mode, a non-secure mode, and an intermediate mode usable to transition between said secure and non-secure modes; and
a plurality of exception handlers (94,96), each of the exception handlers associated with at least one of said modes;
wherein, upon receiving an exception, the processor switches from the intermediate mode to the secure mode in which a secure exception handler (94) determines a security level of said exception; and
wherein, according to said security level, the processor selects one of said modes so that the exception is serviced by either the secure exception handler (94) or a non-secure exception handler (96) in the non-secure mode.

6. The system of claim 5, wherein the secure exception handler is configured and adapted for determining said security level for both the instruction abort exception and the data abort exception using common code.

7. A method, comprising:
receiving an exception while a computer system is in a first security mode;
switching the system to a second security mode to determine a security level of said exception; and
servicing said exception in either the second security mode or a third security mode according to said security level.

8. The method of claim 7, wherein servicing said exception in either the second security mode or a third security mode comprises servicing the exception in either a secure mode or a non-secure mode.

9. The method of any of claims 7 - 8, wherein servicing said exception comprises servicing an exception selected from the group consisting of an instruction abort and a data abort.

10. The method of any of claims 7 - 9, wherein, if the exception was generated by an application running in a user mode, servicing said exception comprises aborting said application.
